(19) Europäisches Patentamt
European Patent Office
Office européen des brevets

(11) **EP 2 847 741 B1**

(12) **EUROPEAN PATENT SPECIFICATION**

(45) Date of publication and mention
of the grant of the patent:
**15.08.2018 Bulletin 2018/33**

(51) Int Cl.:
**G06T 7/00** *(2017.01)*    **G06T 7/73** *(2017.01)*
**G06T 7/80** *(2017.01)*    *G06T 5/00* *(2006.01)*
*G01C 11/02* *(2006.01)*    *G01C 15/00* *(2006.01)*

(21) Application number: **13787672.8**

(22) Date of filing: **08.03.2013**

(86) International application number:
**PCT/US2013/029832**

(87) International publication number:
**WO 2013/169332 (14.11.2013 Gazette 2013/46)**

(54) **CAMERA SCENE FITTING OF REAL WORLD SCENES FOR CAMERA POSE DETERMINATION**

ANPASSUNG EINER KAMERA ZU EINER SZENE VON SZENEN DER REALEN WELT ZUR BESTIMMUNG DER KAMERAORIENTIERUNG

AJUSTEMENT D'UNE CAMÉRA À UNE SCÈNE DE SCÈNES DU MONDE RÉEL POUR LA DÉTERMINATION DE LA POSE DE LA CAMÉRA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2012 US 201213469759**

(43) Date of publication of application:
**18.03.2015 Bulletin 2015/12**

(73) Proprietor: **Raytheon Company**
**Waltham, MA 02451-1449 (US)**

(72) Inventors:
• MAVROMATIS, Theofanis
**Manhattan Beach, California 90267-0921 (US)**
• YEUNG, Fiona C.
**Redondo Beach, California 90278-2823 (US)**
• PUMAR, Mark A.
**Northridge, California 91326-1452 (US)**
• PARKS, Harrison A.
**Los Angeles, California 90034-6249 (US)**

(74) Representative: **Dentons UK and Middle East LLP**
**One Fleet Place**
**London EC4M 7WS (GB)**

(56) References cited:
US-A1- 2003 025 087    US-A1- 2004 233 280
US-A1- 2005 168 437    US-A1- 2009 198 401
US-A1- 2009 323 121

• TOBIAS NÖLL ET AL: "Markerless Camera Pose Estimation - An Overview", VISUALIZATION OF LARGE AND UNSTRUCTURED DATA SETS, IRTG 1131 WORKSHOP, 2010 (VLUDS'10). OASICS - VOL . 19., 1 April 2011 (2011-04-01), pages 45-54, XP055189612, www.dagstuhl.de/oasics DOI: 10.4230/OASIcs.VLUDS.2010.45 ISBN: 978-3-93-989729-3
• ANSAR A ET AL: "LINEAR POSE ESTIMATION FROM POINTS OR LINES", IEEE TRANSACTIONS ON PATTERN ANALYSIS AND MACHINE INTELLIGENCE, IEEE COMPUTER SOCIETY, USA, vol. 25, no. 5, 1 May 2003 (2003-05-01), pages 578-589, XP001185033, ISSN: 0162-8828, DOI: 10.1109/TPAMI.2003.1195992
• Gary Bradski ET AL: "CHAPTER 11, Camera Models and Calibration" In: "Learning OpenCV", September 2008 (2008-09), O'Reilly Media, Inc., CA, USA, XP055189649, ISBN: 978-0-59-651613-0 pages 370-404, * Fig. 11-1 to Fig. 11-13, pages 378-401 *
• AGUILERA ET AL.: 'AUTOMATIC CO-REGISTRATION OF TERRESTRIAL LASER SCANNER AND DIGITAL CAMERA FOR THE GENERATION OF HYBRIDS MODELS.' ISPRS WORKSHOP ON LASER SCANNING 2007 AND SILVILASER 2007 12 September 2007, pages 162 - 168, XP055159223 Retrieved from the Internet: <URL:http://www.isprs.org/proceedings/XXXVI /3-W52/final_papers/Gonzalez_Aguilera_2007. pdf> [retrieved on 2013-04-17]

## Description

### Technical Field

The current disclosure relates to fitting a camera scene to a real world scene, and in an embodiment, but not by way of limitation, fitting a camera field of view into a real world scene and obtaining an accurate camera pose.

### Background

Geo-location is the accurate determination of an object's position with respect to latitude, longitude, and altitude (also referred to a real world coordinates). Currently, most intelligent video systems do not do this. While a few advanced products attempt to geo-locate objects of interest by approximating the camera pose, the methods used tend to be error prone and cumbersome, and errors tend to be high. Other systems detect objects and project their locations onto a surface that is usually planar. For such systems, there is no requirement to accurately "fit" the camera view to the real world scene.

There are a few advanced systems that claim to geo-locate targets based on video use approximation methods during system calibration. For example, such systems might use people walking within the camera scene carrying a stick of known length while the camera viewer attempts to create a 3-D perspective throughout the scene. Using this method, a 3-D perspective of the ground can be formed by having the person within the scene hold the stick vertically at various places in the scene while a person viewing the scene generates a grid. This process can be time consuming, and the grid is defined and based on video rather than by using the actual scene. Consequently, if the camera is removed and repositioned due to maintenance or some other reason, the same costly and time consuming process must be repeated. Additionally, the scene matching accuracy can be relatively low as there is usually no metric for grid accuracy, and the perspective can only be defined on the areas to which a person has access. Thus, the method is usually not suitable if high accuracy is required. This is particularly true for the geo-location of objects detached from the terrain (*e.g.*, flying objects), or for objects found in areas that were inaccessible during the calibration and 3D depth setup.

US 2009/0323121 A1 discloses a hand-held mobile 3D scanner for scanning a scene. The scanner comprises a range sensor that is arranged to sense the location of surface points in the scene relative to the scanner and generate representative location information, a texture sensor that is arranged to sense the texture of each surface point in the scan of the scene and generate representative texture information, and a position and orientation sensor that is arranged to sense the position and orientation of the scanner during the scan of the scene and generate representative position and orientation information. A control system is also provided that is arranged to receive the information from each of the sensors and generate data representing the scan of the scene.

US 2005/0168437 A1 discloses an apparatus and method for processing pose data derived from a pose of an elongate object such as, for example, a jotting implement, a pointer, a robotic arm or a cane. The elongate object has a tip contacting a plane surface with one or more invariant features. The pose of the elongate object is measured optically from on-board by an optical measuring system with the aid of the invariant feature. The pose is used for preparing a corresponding pose data and a subset of the pose data is identified and transmitted to an application such as a user application, where the subset can serve as command data or input data. Since the elongate object moves while its tip is contacting the surface the pose is measured periodically at sufficiently frequent measurement times ti to describe the motion at a desired temporal resolution.; The subset can include all or a portion of the orientation data that describe the orientation of the elongate object in space and/or position data of the tip on the surface. The position can be a relative position of the tip with respect to any feature or its previous position, or an absolute position in world coordinates. The subset can also contain a mix of orientation and position data.

Tobias Nöll et al. teach in "Markerless Camera Pose Estimation - An Overview", IRTG Workshop 2010, pp. 45-54, an overview of the usual camera pose estimation pipeline and discuss several pose estimation algorithms.

Adnan Ansar and Kostas Daniilidis teach in "Linear Pose Estimation from Points or Lines", IEEE PAMI, Vol. 25, No. 5, 2003, an algorithm for the estimation of camera pose from an image of n points or lines with known correspondence.

### Summary

The invention is defined by the appended claims. Roughly speaking, in a first aspect, the present disclosure provides a system comprising: a computer processor configured to: receive from an image sensing device an image depicting a scene, a location of the image sensing device in real world coordinates, and locations of a plurality of points in the scene in the real world coordinates; determine and record pixel locations of the plurality of points; determine a center of the image; map each pixel in the image to an angular offset from the center of the image, wherein the mapping of each pixel characterizes and removes optical distortions of the image sensing device and the angular offset comprises a lateral offset from the center of the image and a vertical offset from the center of the image; generate camera-to-point vectors from the image sensing device to the locations of the plurality of points using the location of the image sensing device in real world coordinates and locations of a plurality of points in the scene in the real world coordinates; generate pixel-based vectors from the pixel locations of the plurality of points using the angular offsets; and iteratively align the pixel based vectors to the camera-to-point vectors to determine a rotation matrix describing a pose of the image sensing device and a metric based on an angular root mean square error between the pixel based vectors and the camera-to-point vectors; and after the pose of the image sensing device has been changed, re-determine the pose of the image sensing device, without repeating the mapping of each pixel, by generating pixel-based vectors from the pixel locations of the plurality of points using the angular offsets; and iteratively aligning the pixel based vectors to the camera-to-point vectors to determine a rotation matrix describing a pose of the image sensing device and a metric based on an angular root mean square error between the pixel based vectors and the camera-to-point vectors.

In a second aspect, the present disclosure provides a computer readable storage device comprising instructions that when executed by a processor execute a process comprising: receiving from an image sensing device an image depicting a scene, a location of the image sensing device in real world coordinates, and locations of a plurality of points in the scene in the real world coordinates; determining and recording pixel locations of the plurality of points; determining a center of the image; mapping each pixel in the image to an angular offset from the center of the image, wherein the mapping of each pixel characterizes and removes optical distortions of the image sensing device and the angular offset comprises a lateral offset from the center of the image and a vertical offset from the center of the image; generating camera-to-point vectors from the image sensing device to the locations of the plurality of points using the location of the image sensing device in real world coordinates and locations of a plurality of points in the scene in the real world coordinates; generating pixel-based vectors from the pixel locations of the plurality of points using the angular offsets; and iteratively aligning the pixel based vectors to the camera-to-point vectors to determine a rotation matrix describing a pose of the image sensing device and a metric based on an angular root mean square error between the pixel based vectors and the camera-to-point vectors; and after the pose of the image sensing device has been changed, re-determining the pose of the image sensing device, without repeating the mapping of each pixel, by generating pixel-based vectors from the pixel locations of the plurality of points using the angular offsets; and iteratively aligning the pixel based vectors to the camera-to-point vectors to determine a rotation matrix describing a pose of the image sensing device and a metric based on an angular root mean square error between the pixel based vectors and the camera-to-point vectors.

In a third aspect, the present disclosure provides a process comprising: receiving from an image sensing device an image depicting a scene, a location of the image sensing device in real world coordinates, and locations of a plurality of points in the scene in the real world coordinates; determining and recording pixel locations of the plurality of points; determining a center of the image; mapping each pixel in the image to an angular offset from the center of the image, wherein the mapping of each pixel characterizes and removes optical distortions of the image sensing device and the angular offset comprises a lateral offset from the center of the image and a vertical offset from the center of the image; generating camera-to-point vectors from the image sensing device to the locations of the plurality of points using the location of the image sensing device in real world coordinates and locations of a plurality of points in the scene in the real world coordinates; generating pixel-based vectors from the pixel locations of the plurality of points using the angular offsets; and iteratively aligning the pixel based vectors to the camera-to-point vectors to determine a rotation matrix describing a pose of the image sensing device and a metric based on an angular root mean square error between the pixel based vectors and the camera-to-point vectors; and after the pose of the image sensing device has been changed, re-determining the pose of the image sensing device, without repeating the mapping of each pixel, by generating pixel-based vectors from the pixel locations of the plurality of points using the angular offsets; and iteratively aligning the pixel based vectors to the camera-to-point vectors to determine a rotation matrix describing a pose of the image sensing device and a metric based on an angular root mean square error between the pixel based vectors and the camera-to-point vectors.

**Brief Description of the Drawings**

FIG. 1 is a block diagram of a process to fit a camera scene to a real world scene.

FIGS. 2A, 2B, and 2C are other diagrams of a process to fit a camera scene to a real world scene.

FIG. 3 illustrates a camera scene geodetic survey using a land surveying total station.

FIG. 4 illustrates a graphical implementation of a camera scene fitting.

FIG. 5 is a diagram of features and steps of a process of fitting a camera scene to a real world scene.

FIG. 6 is a block diagram of a computer system upon which one or more embodiments of the present disclosure can execute.

## Detailed Decription

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The present disclosure describes a process for accurately and efficiently fitting a camera field of view into a real world scene and obtaining an accurate camera pose, as well as accurately mapping camera pixels to real world vectors originating at the camera and pointing to objects in the camera scene. An embodiment of the process does not depend on camera terrain perspective approximations. Moreover, once the process is performed, it does not need to be repeated if a camera is removed and replaced due to maintenance, or due to some other reason, which is not the case with prior art systems.

In an embodiment, a three step process offers significant advantages when compared to prior art systems used in intelligent video surveillance products. Specifically, the three step process offers higher accuracy by taking advantage of a highly accurate geodetic survey, as well as highly accurate and highly resolute camera imagery. Existing methods are primarily based only on video and operator-based terrain modeling, which tend to have higher errors, especially in complex scenes or uneven terrain. The process further takes advantage of fast and accurate camera field-of-view mapping of existing methods that accurately compute camera distortions. The process takes the additional step to map the scene back to the distorted camera view resulting in a fast, simple, and highly accurate process for camera scene matching. Unlike existing methods, once the first two steps of the described process are performed, one needs only to perform the third step to match the camera scene in the event that a camera is nudged or removed and replaced due to maintenance.

Intelligent video-based systems that are capable of producing high accuracy three-dimensional (3-D) or surface-based tracks of objects require an accurate "fitting" of the real world scene as viewed by each of the system's cameras. This is particularly necessary when performing 3-D tracking via the use of multiple cameras with overlapping fields of view, since this requires high accuracy observations in order to properly correlate target positions between camera images. An embodiment is a fast, efficient, and highly accurate process to perform this task. The methodology is a significant improvement over existing processes, and it can help in reducing both cost and time during the installation, use, and maintenance of video surveillance systems requiring high accuracy.

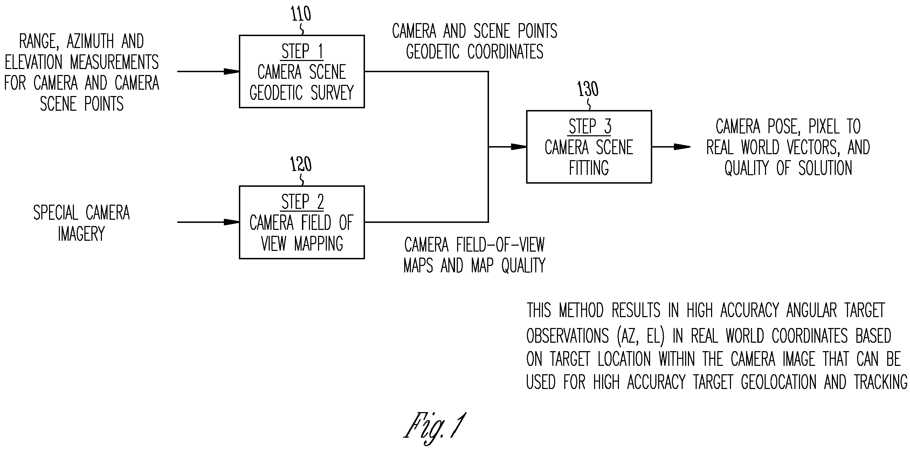

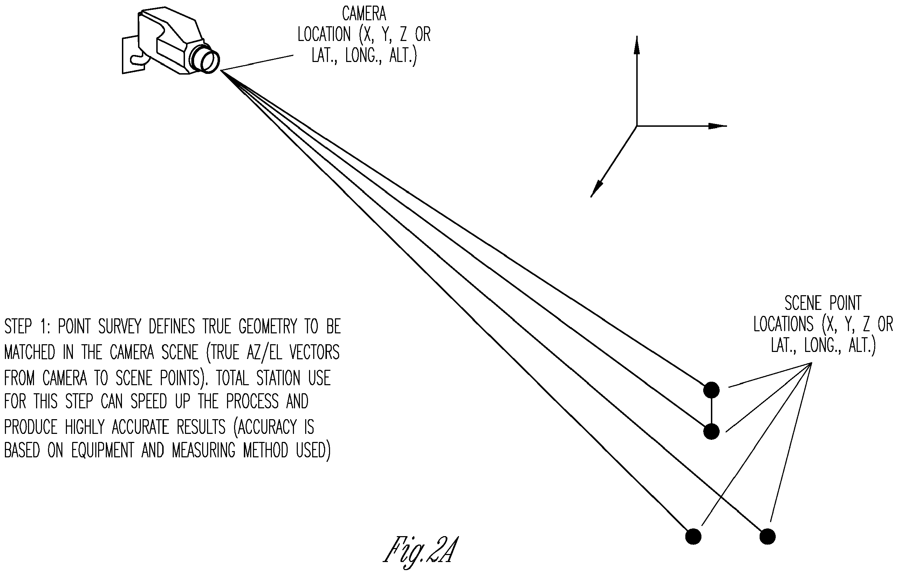

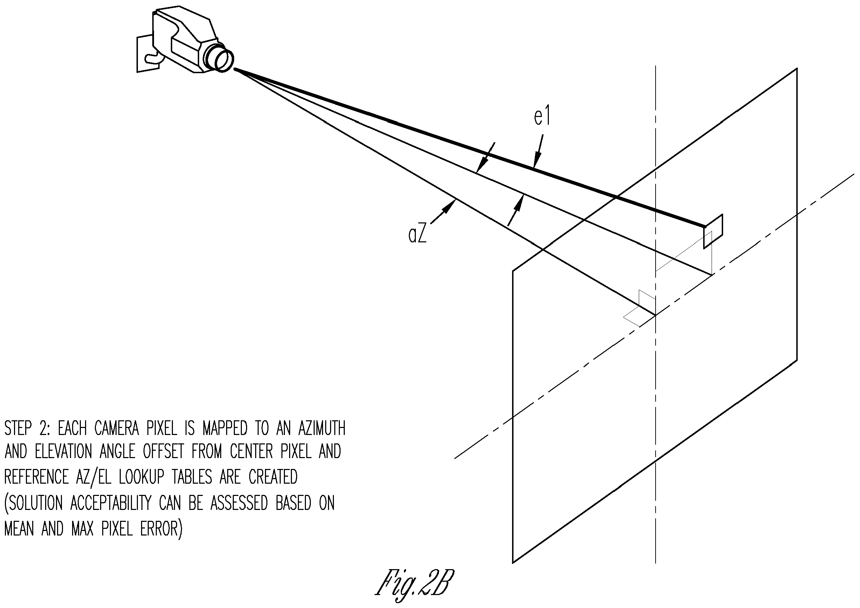

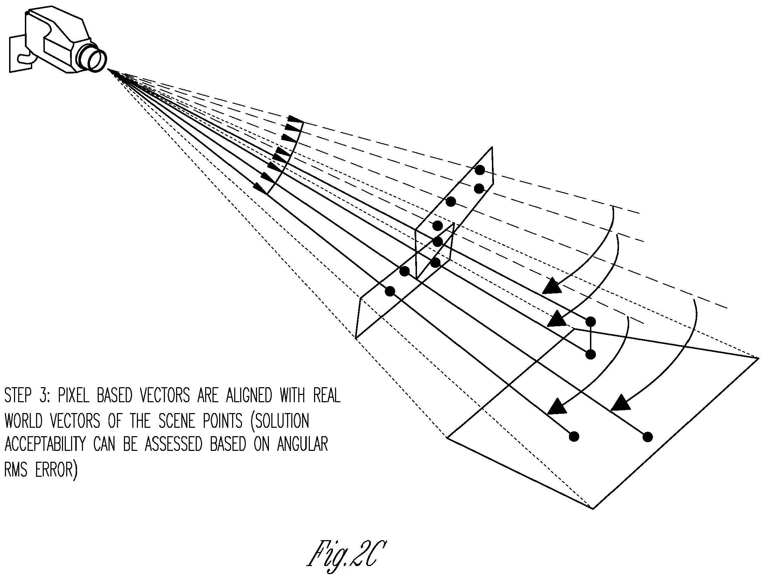

An embodiment consists of three distinct steps, each of which contains metrics to determine acceptable accuracy levels towards meeting a wide range of system accuracy requirements. The three steps of this process are as follows, and the steps are illustrated in block diagram form in **FIGS. 1, 2A, 2B,** and **2C.**

First, at **110,** a camera scene geodetic survey is executed. In this step, the camera and several distinct points within the camera scene are surveyed and their positions are recorded.

Second, at **120,** a camera field of view mapping is executed. In this step, each pixel in the camera image gets mapped and the angular offsets from the center of the image for each pixel are tabulated. This step accounts for all major error sources such as focal plane tilting and optical distortions such as pin cushion and barrel distortion.

Third, at **130,** a camera scene fitting is executed. In this step, a manual or automated selection of the geo-surveyed points within the camera scene from the first step is performed utilizing the camera field-of-view mapping of the second step to accurately determine camera pose resulting in an optimum fit of the camera scene into real world coordinates.

For a fixed camera location at a fixed zoom setting, the first and second steps only need to be performed once, even if the camera is removed and replaced due to maintenance or other reasons. In that case, only the selection of a few of the surveyed points from the image needs to be performed to re-determine a camera's pose. The third step is the fastest of the three steps. Even if the third step is performed manually, it typically only requires a few mouse clicks on the surveyed points within the camera scene. This results in a highly accurate scene fitting solution. As noted, the three steps are illustrated in a block diagram in **FIG. 1**, and each of the three steps is described below in more detail.

Block **110** in **FIG. 1** and **FIG. 2A** are referred to as the camera scene geodetic survey, which involves the use of standard methods for determining the accurate geo-locations of points within the scene of a camera. To accomplish this, a person views the output of the camera and determines points that are visible and unlikely to be displaced. Once these points are determined, conventional geodetic survey methods are used to obtain accurate point and camera positions. In an embodiment, a fast, efficient, and highly accurate method for doing this is to use a "total station" such as those used by land surveyors.

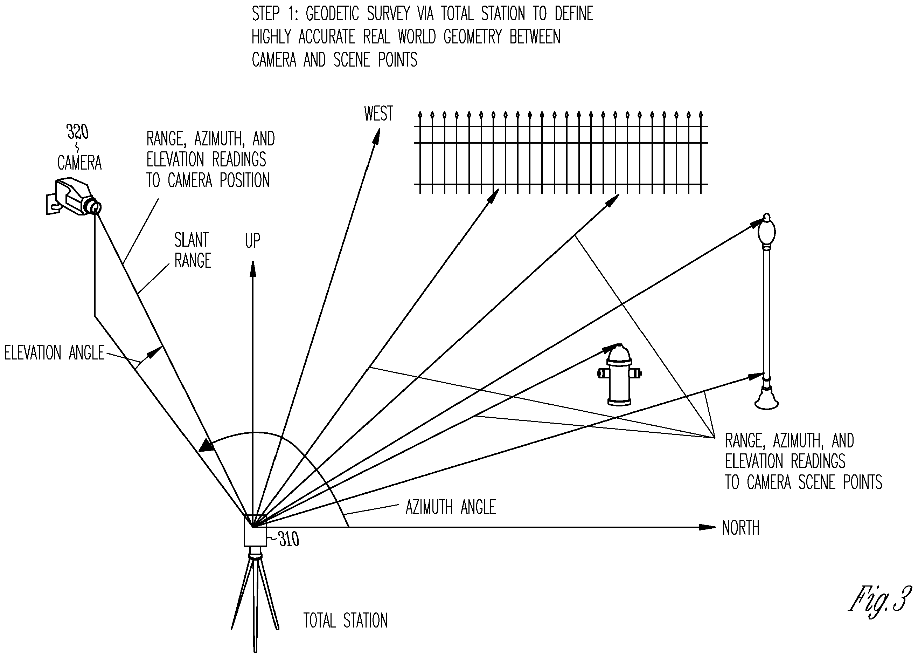

Referring to **FIG. 3**, the total station **310** is used to record the range, elevation angle, and azimuth angle readings for each of the points of interest within the cameras' scene, as well as the cameras' positions. These readings, along with the total station's geo-location, are used to compute the accurate geo-locations of the entire scene's points of interest and the positions of the camera **320**. Although other methods can be used to perform the first step of a camera geodetic survey, the total station method results in highly accurate geo-locations and can be performed in a relatively short amount of time without the need for long or specialized training. A single survey session could survey multiple points and multiple cameras, thereby significantly reducing the "per camera" time needed to perform this first step. Also, this first step does not need to be repeated unless the camera pointing changes significantly and additional scene points are needed to re-fit the camera scene.

Block **120** in **FIG. 1** and **FIG. 2B** can be referred to as the camera field of view mapping, and it maps every pixel in the camera's image to a pair of angular offsets (right/left and up/down) from the camera's center pixel or boresight. Several distinct methods can be used to perform this second step. One method is to take advantage of tools like the ones described in OpenCV (Open Source Computer Vision Library) to generate a camera model and estimate its distortions via the use of a flat checkerboard pattern. OpenCV is a library of programming functions mainly aimed at real time computer vision. The library is cross-platform, and focuses mainly on real-time image processing. More information on OpenCV can be found at opencv.willowgarage.com.

The second step **120** consists of two parts. The first part characterizes and removes camera optical distortions. An example method is described in Open CV that characterizes and removes distortions from the camera's field-of-view by collecting multiple images of a checkerboard pattern at different perspectives throughout the entire camera field-of-view. The second part is a new process that utilizes the results from the first part to generate offset angles from the boresight for each camera pixel based on both the true and the distorted camera field-of-view. A metric that quantifies the error statistics of this pixel's offset angle mapping is also defined. One of the advantages of this particular field-of-view mapping method is that it can be performed in the field for mounted and operational cameras without the need for removing the cameras to calibrate them offsite. This second step can be performed in a short period of time for each camera and it does not need to be repeated unless the camera's field-of-view changes *(e.g.,* by changing the camera lens zoom setting). Once this step is completed, all pixels in the camera field of view will have a pair of angular offsets (up-down and right-left) from the camera boresight. The boresight angular offsets are zero.

The two parts of the second step **120** can be further explained as follows. A first part of the second step **120** uses an Open CV chessboard method to compute a camera's intrinsic parameters (cx, cy), distortions (radial: k1, k2, k3; tangential: p1, p2), and undistorted x", y" mapping. The Open CV chessboard method can also be used to display an undistorted image for an accuracy check. A second part of the second step **120** uses an optimization algorithm to solve for reverse (distorted) x' y' mapping, given x", y" and distortions (k1, k2, k3, p1, p2). Azimuth and elevation projection tables are distorted on the image plane using the just described reverse x' y' mapping.

The two parts of the second step **120** can be described in more detail as follows. The functions in this section use the so-called pinhole camera model. That is, a scene view is formed by projecting 3D points into the image plane using a perspective transformation.

$$sm' = A[R|t]M'$$

or

$$s\begin{bmatrix} u \\ v \\ 1 \end{bmatrix} = \begin{bmatrix} f_x & 0 & c_x \\ 0 & f_y & c_y \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} X \\ Y \\ Z \\ 1 \end{bmatrix}$$

Where *(X, Y,Z)* are the coordinates of a 3D point in the real world coordinate space (latitude, longitude, and altitude), and *(u,* v) are the coordinates of the projection point in pixels. A is referred to as a camera matrix, or a matrix of intrinsic parameters. The coordinates *(cx, cy)* are a principal point (that is usually at the image center), and $f_x$, $f_y$ are the focal lengths expressed in pixel-related units. Thus, if an image from a camera is scaled by some factor, all of these parameters should be scaled *(i.e.,* multiplied or divided respectively) by the same factor. The matrix of intrinsic parameters does not depend on the scene viewed, and once estimated, the matrix can be re-used (as long as the focal length is fixed (in the case of zoom lens)).

The joint rotation-translation matrix *[R|t]* is called a matrix of extrinsic parameters. It is used to describe the camera motion around a static scene, or vice versa, and the rigid motion of an object in front of a still camera. That is, *[R|t]* translates coordinates of a point, *(X, Y, Z)* to some coordinate system, fixed with respect to the camera. The transformation above is equivalent to the following (when $z \neq 0$):

$$\begin{bmatrix} x \\ y \\ z \end{bmatrix} = R \begin{bmatrix} X \\ Y \\ Z \end{bmatrix} + t$$

$$x' = x/z$$

$$y' = y/z$$

$$u = f_x * x' + c_x$$

$$v = f_y * y' + c_y$$

Real lenses usually have some distortion, mostly radial distortion and slight tangential distortion. So, the above model is extended as:

$$\begin{bmatrix} x \\ y \\ z \end{bmatrix} = r \begin{bmatrix} X \\ Y \\ Z \end{bmatrix} + t$$

$$x' = x/z$$

$$y' = y/z$$

$$x'' = x'\left(1 + k_1 r^2 + k_2 r^4 + k_3 r^6\right) + 2p_1 x' y' + p_2\left(r^2 + 2x'^2\right)$$

$$y'' = y'\left(1 + k_1 r^2 + k_2 r^4 + k_3 r^6\right) + p_1\left(r^2 + 2y'^2\right) + 2p_2 x' y'$$

where

$$r^2 = x'^2 + y'^2$$

$$u = f_x * x'' + c_x$$
$$v = f_y * y'' + c_y$$

$k_1$, $k_2$, $k_3$ are radial distortion coefficients, $p_1$, $p_2$ are tangential distortion coefficients. It is noted that higher-order coefficients are not considered in OpenCV.

Block **130** in **FIG. 1** and **FIG. 2C** can be referred to as the camera scene fitting step, and it utilizes the results of the first two steps to optimally fit the camera's field-of-view into the real world scene. For this, an automated or operator-driven manual process matches each point in the camera scene to the previously geo-surveyed points determined in the first step (*e.g.,* by mouse clicking on the corresponding pixel of the point of interest within the scene). Angular offsets for each pixel derived from the second step are used to generate vectors from the camera to the designated points in the scene. These pixel-based vectors are then compared to the camera-to-point vectors computed from the real world survey of the first step. An iterative method for optimally aligning the pixel-derived vectors with the real world survey-based vectors is then performed. The output of this process is a rotation matrix describing the camera's pose along with a metric based on the angular root mean square (RMS) error between the pixel-based and survey-based vectors. The rotation metric quantifies the accuracy of the scene fitting process. This step can be performed in a very short period of time (*e.g.,* in one or two minutes) and can be easily repeated if the cameras are nudged or remounted.

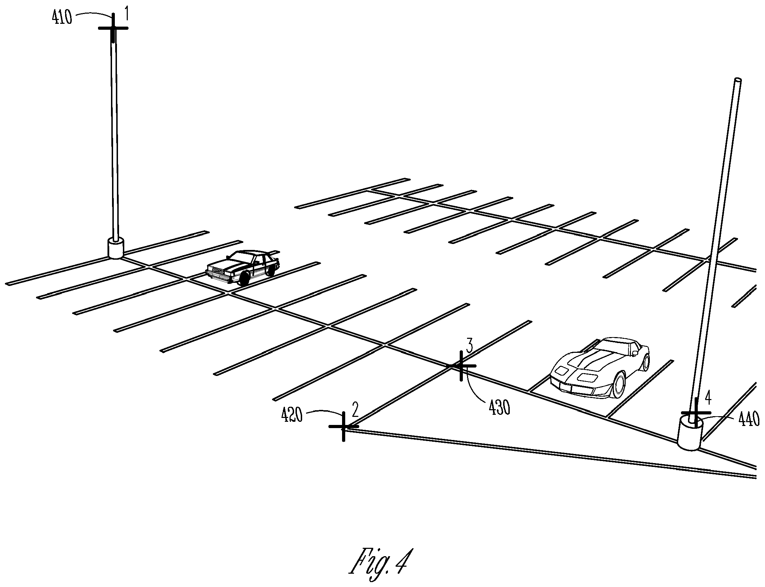

**FIG. 4** illustrates a graphical implementation of the third step **130**. In this example, the surveyed coordinates of the camera location and of four fixed points **410, 420, 430** and **440** in the camera scene are obtained from the first step **110**, and the camera field-of-view maps are obtained from the second step **120**. For the third step **130,** an operator matches the four surveyed points **(410, 420, 430** and **440)** on the scene as shown in **FIG. 4,** and an optimization algorithm minimizes the angular errors between the true camera-to-points geometry (obtained from the first step **110**) and the video based geometry (with camera location information from the first step's camera field-of-view mapping information from the second step **120** and operator inputs from the third step **130**). The output of this process is a rotation matrix describing the camera pose along with a metric that is based on angular RMS error among the pixel-based and survey-based vectors that quantifies the accuracy of the scene fitting process. This step can be performed in a very short period of time (*e.g.,* very few minutes) and can be easily repeated if the cameras get "nudged" or removed and then reinstalled due to maintenance or other reasons.

The above-described three step method for accurately fitting the camera scene into the real world can be implemented in different ways that result in a highly accurate, highly efficient, and very fast camera scene fitting. This is especially beneficial for a multi-camera, intelligent detection, tracking, alerting, and cueing system. If the camera pose changes or the camera is remounted after maintenance, only the third step **130** is necessary for recalibration. If the camera zoom setting changes, only the second step **120** and the third step **130** are necessary for recalibration.

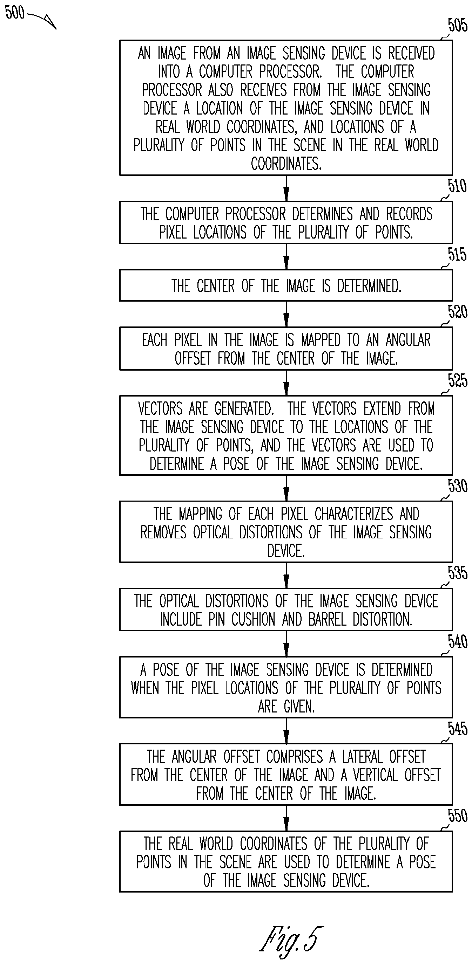

**FIG. 5** is a block diagram of features and steps of an example process **500** for fitting a camera scene to a real world scene. **FIG. 5** includes a number of feature and process blocks **505** - **550**. Though arranged serially in the example of **FIG. 5,** other examples may reorder the blocks, omit one or more blocks, and/or execute two or more blocks in parallel using multiple processors or a single processor organized as two or more virtual machines or subprocessors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

At **505,** an image from an image sensing device is received into a computer processor. The image depicts a scene from the field of view of the image sensing device. In an embodiment, the image sensing device is a video camera. The computer processor also receives from the image sensing device a location of the image sensing device in real world coordinates, and locations of a plurality of points in the scene in the real world coordinates. At **510,** the computer processor determines and records pixel locations of the plurality of points. At **515,** the center of the image is determined. At **520,** each pixel in the image is mapped to an angular offset from the center of the image. Lastly, at **525,** vectors are generated. The vectors extend from the image sensing device to the locations of the plurality of points, and the vectors are used to determine a pose of the image sensing device.

At **530**, the mapping of each pixel characterizes and removes optical distortions of the image sensing device. At **535**, the optical distortions of the image sensing device include pin cushion and barrel distortion. At **540**, a pose of the image sensing device is determined when the pixel locations of the plurality of points are given. At **545**, the angular offset comprises a lateral offset from the center of the image and a vertical offset from the center of the image. At **550**, the real world coordinates of the plurality of points in the scene are used to determine a pose of the image sensing device.

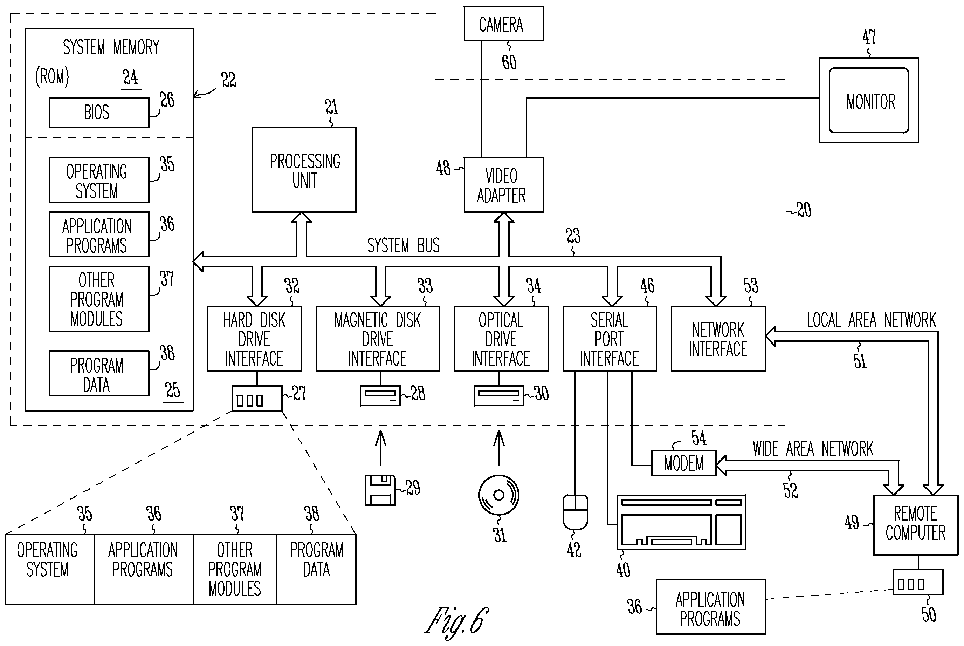

**FIG. 6** is an overview diagram of hardware and operating environments in conjunction with which embodiments of the invention may be practiced. The description of **FIG. 6** is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCs, minicomputers, mainframe computers, and the like. The invention may also be practiced in distributed computer environments where tasks are performed by I/O remote processing devices that are linked through a communications network. In a distributed computing environment, program modules may be located in both local and remote memory storage devices.

In the embodiment shown in **FIG. 6**, a hardware and operating environment is provided that is applicable to any of the servers and/or remote clients shown in the other Figures.

As shown in **FIG. 6**, one embodiment of the hardware and operating environment includes a general purpose computing device in the form of a computer **20** (*e.g.,* a personal computer, workstation, or server), including one or more processing units **21**, a system memory **22**, and a system bus **23** that operatively couples various system components including the system memory **22** to the processing unit **21**. There may be only one or there may be more than one processing unit **21**, such that the processor of computer **20** comprises a single central-processing unit (CPU), or a plurality of processing units, commonly referred to as a multiprocessor or parallel-processor environment. A multiprocessor system can include cloud computing environments. In various embodiments, computer **20** is a conventional computer, a distributed computer, or any other type of computer.

The system bus **23** can be any of several types of bus structures including a memory bus or memory controller, a peripheral bus, and a local bus using any of a variety of bus architectures. The system memory can also be referred to as simply the memory, and, in some embodiments, includes read-only memory (ROM) **24** and random-access memory (RAM) **25**. A basic input/output system (BIOS) program **26**, containing the basic routines that help to transfer information between elements within the computer **20**, such as during start-up, may be stored in ROM **24**. The computer **20** further includes a hard disk drive **27** for reading from and writing to a hard disk, not shown, a magnetic disk drive **28** for reading from or writing to a removable magnetic disk **29,** and an optical disk drive **30** for reading from or writing to a removable optical disk **31** such as a CD ROM or other optical media.

The hard disk drive **27,** magnetic disk drive **28,** and optical disk drive **30** couple with a hard disk drive interface **32,** a magnetic disk drive interface **33,** and an optical disk drive interface **34,** respectively. The drives and their associated computer-readable media provide non volatile storage of computer-readable instructions, data structures, program modules and other data for the computer **20**. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (*e.g.,* RAID storage devices) and the like, can be used in the exemplary operating environment.

A plurality of program modules can be stored on the hard disk, magnetic disk **29,** optical disk **31,** ROM **24,** or RAM **25,** including an operating system **35,** one or more application programs **36,** other program modules **37,** and program data **38.** A plug in containing a security transmission engine for the present invention can be resident on any one or number of these computer-readable media.

A user may enter commands and information into computer **20** through input devices such as a keyboard **40** and pointing device **42**. Other input devices (not shown) can include a microphone, joystick, game pad, satellite dish, scanner, or the like. These other input devices are often connected to the processing unit **21** through a serial port interface **46** that is coupled to the system bus **23,** but can be connected by other interfaces, such as a parallel port, game port, or a universal serial bus (USB). A monitor **47** or other type of display device can also be connected to the system bus **23** via an interface, such as a video adapter **48**. The monitor **47** can display a graphical user interface for the user. In addition to the monitor **47,** computers typically include other peripheral output devices (not shown), such as speakers and printers. A camera **60** can also be connected to the system bus **23** via video adapter **48**.

The computer **20** may operate in a networked environment using logical connections to one or more remote computers or servers, such as remote computer **49**. These logical connections are achieved by a communication device coupled to or a part of the computer **20;** the invention is not limited to a particular type of communications device. The remote computer **49** can be another computer, a server, a router, a network PC, a client, a peer device or other common network node, and typically includes many or all of the elements described above I/0 relative to the computer **20,** although only a memory storage device **50** has been illustrated. The logical connections depicted in **FIG. 6** include a local area network (LAN) **51** and/or a wide area network (WAN) **52**. Such networking environments are commonplace in office networks, enterprise-wide computer networks, intranets and the internet, which are all types of networks.

When used in a LAN-networking environment, the computer **20** is connected to the LAN **51** through a network interface or adapter **53,** which is one type of communications device. In some embodiments, when used in a WAN-networking environment, the computer **20** typically includes a modem **54** (another type of communications device) or any other type of communications device, *e.g.,* a wireless transceiver, for establishing communications over the wide-area network **52,** such as the internet. The modem **54,** which may be internal or external, is connected to the system bus 23 via the serial port interface **46**. In a networked environment, program modules depicted relative to the computer **20** can be stored in the remote memory storage device **50** of remote computer, or server **49**. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

In the foregoing description of the embodiments, various features are grouped together in a single embodiment for the purpose of streamlining the disclosure. The scope of the invention is, however, only determined by the appended claims.

## Claims

1. A system (20) comprising:

   a computer processor (21) configured to:

   receive from an image sensing device (60) an image depicting a scene, a location of the image sensing device in real world coordinates, and locations of a plurality of points (410, 420, 430, 440) in the scene in the real world coordinates;
   determine and record pixel locations of the plurality of points;
   determine a center of the image;
   map each pixel in the image to an angular offset from the center of the image, wherein the mapping of each pixel characterizes and removes optical distortions of the image sensing device and the angular offset comprises a lateral offset from the center of the image and a vertical offset from the center of the image;
   generate camera-to-point vectors from the image sensing device to the locations of the plurality of points using the location of the image sensing device in real world coordinates and locations of a plurality of points in the scene in the real world coordinates;
   generate pixel-based vectors from the pixel locations of the plurality of points using the angular offsets; and
   iteratively align the pixel based vectors to the camera-to-point vectors to determine a rotation matrix describing a pose of the image sensing device and a metric based on an angular root mean square error between the pixel based vectors and the camera-to-point vectors; and
   after the pose of the image sensing device has been changed, re-determine the pose of the image sensing device, without repeating the mapping of each pixel, by generating pixel-based vectors from the pixel locations of the plurality of points using the angular offsets; and
   iteratively aligning the pixel based vectors to the camera-to-point vectors to determine a rotation matrix describing a pose of the image sensing device and a metric based on an angular root mean square error between the pixel based vectors and
   the camera-to-point vectors.

2. The system of claim 1, wherein the optical distortions of the image sensing device include pin cushion and barrel distortion.

3. A computer readable storage device comprising instructions that when executed by a processor (21) execute a process comprising:

   receiving (505) from an image sensing device (60) an image depicting a scene, a location of the image sensing device in real world coordinates, and locations of a plurality of points (410, 420, 430, 440) in the scene in the real world coordinates;
   determining and recording (510) pixel locations of the plurality of points;
   determining (515) a center of the image;
   mapping (520) each pixel in the image to an angular offset from the center of the image, wherein the mapping of each pixel characterizes and removes optical distortions of the image sensing device and the angular offset comprises a lateral offset from the center of the image and a vertical offset from the center of the image;
   generating (525) camera-to-point vectors from the image sensing device to the locations of the plurality of points using the location of the image sensing device in real world coordinates and locations of a plurality of points in the scene in the real world coordinates;
   generating pixel-based vectors from the pixel locations of the plurality of points using the angular offsets; and
   iteratively aligning the pixel based vectors to the camera-to-point vectors to determine a rotation matrix describing a pose of the image sensing device and a metric based on an angular root mean square error between the pixel based vectors and the camera-to-point vectors; and

after the pose of the image sensing device has been changed, re-determining the pose of the image sensing device, without repeating the mapping of each pixel, by
generating pixel-based vectors from the pixel locations of the plurality of points using the angular offsets; and iteratively aligning the pixel based vectors to the camera-to-point vectors to determine a rotation matrix describing a pose of the image sensing device and a metric based on an angular root mean square error between the pixel based vectors and the camera-to-point vectors.

4. The computer readable storage device of claim 3, wherein the optical distortions of the image sensing device include pin cushion and barrel distortion.

5. A computer-implemented process comprising:

receiving (505) from an image sensing device (60) an image depicting a scene, a location of the image sensing device in real world coordinates, and locations of a plurality of points in the scene in the real world coordinates; determining and recording (510) pixel locations of the plurality of points;
determining (515) a center of the image;
mapping (520) each pixel in the image to an angular offset from the center of the image, wherein the mapping of each pixel characterizes and removes optical distortions of the image sensing device and the angular offset comprises a lateral offset from the center of the image and a vertical offset from the center of the image;
generating (525) camera-to-point vectors from the image sensing device to the locations of the plurality of points using the location of the image sensing device in real world coordinates and locations of a plurality of points in the scene in the real world coordinates;
generating pixel-based vectors from the pixel locations of the plurality of points using the angular offsets; and iteratively aligning the pixel based vectors to the camera-to-point vectors to determine a rotation matrix describing a pose of the image sensing device and a metric based on an angular root mean square error between the pixel based vectors and the camera-to-point vectors; and
after the pose of the image sensing device has been changed, re-determining the pose of the image sensing device, without repeating the mapping of each pixel, by
generating pixel-based vectors from the pixel locations of the plurality of points using the angular offsets; and iteratively aligning the pixel based vectors to the camera-to-point vectors to determine a rotation matrix describing a pose of the image sensing device and a metric based on an angular root mean square error between the pixel based vectors and the camera-to-point vectors.

6. The process of claim 5 wherein the optical distortions of the image sensing device include pin cushion and barrel distortion.

**Patentansprüche**

1. System (20), umfassend:

einen Computerprozessor (21), der konfiguriert ist, um:

aus einer bilderfassenden Vorrichtung (60) ein Bild zu empfangen, das eine Szene, eine Position der bilderfassenden Vorrichtung in realen Weltkoordinaten, und Positionen von einer Vielzahl von Punkten (410, 420, 430, 440) in der Szene in den realen Weltkoordinaten darstellt;
Pixelpositionen der Vielzahl von Punkten zu bestimmen und zu verzeichnen;
ein Zentrum des Bildes zu bestimmen;
jedes Pixel im Bild in einem Winkelversatz vom Zentrum des Bildes abzubilden, wobei das Abbilden von jedem Pixel optische Verzeichnungen der bilderfassenden Vorrichtung charakterisiert und entfernt und der Winkelversatz einen lateralen Versatz vom Zentrum des Bildes und einen vertikalen Versatz vom Zentrum des Bildes umfasst;
Kamera-zu-Punkt-Vektoren aus der bilderfassenden Vorrichtung zu den Positionen der Vielzahl von Punkten unter Anwendung der Position der bilderfassenden Vorrichtung in realen Weltkoordinaten und Positionen von einer Vielzahl von Punkten in der Szene in realen Weltkoordinaten zu erzeugen;
pixelbasierte Vektoren von den Pixelpositionen der Vielzahl von Punkten unter Anwendung der Winkelversätze zu erzeugen und
die pixelbasierten Vektoren iterativ auf die Kamera-zu-Punkt-Vektoren auszurichten, um eine Rotationsmatrix zu bestimmen, die eine Orientierung der bilderfassenden Vorrichtung und eine Metrik beschreibt, die auf einer mittleren quadratischen Winkelabweichung zwischen den pixelbasierten Vektoren und den Kamera-zu-Punkt-Vektoren basiert; und

nachdem die Orientierung der bilderfassenden Vorrichtung geändert worden ist, erneut die Orientierung der bilderfassenden Vorrichtung zu bestimmen, ohne das Abbilden von jedem Pixel zu wiederholen, durch Erzeugen von pixelbasierten Vektoren aus den Pixelpositionen der Vielzahl von Punkten unter Anwendung der Winkelversätze; und

durch iteratives Ausrichten der pixelbasierten Vektoren auf die Kamera-zu-Punkt-Vektoren, um eine Rotationsmatrix zu bestimmen, die eine Orientierung der bilderfassenden Vorrichtung und eine Metrik beschreibt, die auf einer mittleren quadratischen Winkelabweichung zwischen den pixelbasierten Vektoren und den Kamera-zu-Punkt-Vektoren basiert.

2. System nach Anspruch 1, wobei die optischen Verzeichnungen der bilderfassenden Vorrichtung kissenförmige und tonnenförmige Verzeichnungen enthalten.

3. Computerlesbare Speichervorrichtung, die Anweisungen enthält, die bei Ausführung durch einen Prozessor (21) ein Verfahren durchführen, umfassend:

Empfangen (505) aus einer bilderfassenden Vorrichtung (60) eines Bildes, das eine Szene, eine Position der bilderfassenden Vorrichtung in realen Weltkoordinaten und Positionen von einer Vielzahl von Punkten (410, 420, 430, 440) in der Szene in den realen Weltkoordinaten darstellt;
Bestimmen und Aufzeichnen (510) der Pixelpositionen der Vielzahl von Punkten;
Bestimmen (515) eines Zentrums des Bildes;
Abbilden (520) von jedem Pixel im Bild in einem Winkelversatz zum Zentrum des Bildes, wobei das Abbilden von jedem Pixel optische Verzeichnungen der bilderfassenden Vorrichtung charakterisiert und entfernt und der Winkelversatz einen lateralen Versatz vom Zentrum des Bildes und einen vertikalen Versatz vom Zentrum des Bildes umfasst;
Erzeugen (525) von Kamera-zu-Punkt-Vektoren aus der bilderfassenden Vorrichtung zu den Positionen der Vielzahl von Punkten unter Anwendung der Position der bilderfassenden Vorrichtung in realen Weltkoordinaten und Positionen von einer Vielzahl von Punkten in der Szene in den realen Weltkoordinaten;
Erzeugen von pixelbasierten Vektoren aus den Pixelpositionen der Vielzahl von Punkten unter Anwendung der Winkelversätze; und
iterativ Ausrichten der pixelbasierten Vektoren auf die Kamera-zu-Punkt-Vektoren, um eine Rotationsmatrix zu bestimmen, die eine Orientierung der bilderfassenden Vorrichtung und eine Metrik beschreibt, die auf einer mittleren quadratischen Winkelabweichung zwischen den pixelbasierten Vektoren und den Kamera-zu-Punkt-Vektoren basiert; und
nachdem die Orientierung der bilderfassenden Vorrichtung geändert worden ist, erneut Bestimmen der Orientierung der bilderfassenden Vorichtung, ohne das Abbilden von jedem Pixel zu wiederholen, durch
Erzeugen von pixelbasierten Vektoren aus den Pixelpositionen der Vielzahl von Punkten unter Anwendung der Winkelversätze; und
iterativ Ausrichten der pixelbasierten Vektoren auf die Kamera-zu-Punkt-Vektoren, um eine Rotationsmatrix zu bestimmen, die eine Orientierung der bilderfassenden Vorrichtung und eine Metrik beschreibt, die auf einer mittleren quadratischen Winkelabweichung zwischen den pixelbasierten Vektoren und den Kamera-zu-Punkt-Vektoren basiert.

4. Computerlesbare Speichervorrichtung nach Anspruch 3, wobei die optischen Verzeichnungen der bilderfassenden Vorrichtung kissenförmige und tonnenförmige Verzeichnungen enthalten.

5. Computerimplementiertes Verfahren, umfassend:

Empfangen (505) aus einer bilderfassenden Vorrichtung (60) eines Bildes, das eine Szene, eine Position der bilderfassenden Vorrichtung in realen Weltkoordinaten und Positionen von einer Vielzahl von Punkten in der Szene in den realen Weltkoordinaten darstellt;
Bestimmen und Aufzeichnen (510) von Pixelpositionen der Vielzahl von Punkten;
Bestimmen (515) eines Zentrums des Bildes;
Abbilden (520) von jedem Pixel im Bild in einem Winkelversatz zum Zentrum des Bildes, wobei das Abbilden von jedem Pixel optische Verzeichnungen der bilderfassenden Vorrichtung charakterisiert und entfernt und der Winkelversatz einen lateralen Versatz vom Zentrum des Bildes und einen vertikalen Versatz vom Zentrum des Bildes umfasst:

Erzeugen (525) von Kamera-zu-Punkt-Vektoren aus der bilderfassenden Vorrichtung zu den Positionen der Vielzahl von Punkten unter Anwendung der Position der bilderfassenden Vorrichtung in realen Weltkoordinaten und Positionen von einer Vielzahl von Punkten in der Szene in den realen Weltkoordinaten. Erzeugen von pixelbasierten Vektoren aus den Pixelpositionen der Vielzahl von Punkten unter Anwendung der Winkelversätze; und

iterativ Ausrichten der pixelbasierten Vektoren auf die Kamera-zu-Punkt-Vektoren, um eine Rotationsmatrix zu bestimmen, die eine Orientierung der bilderfassenden Vorrichtung und eine Metrik beschreibt, die auf einer mittleren quadratischen Winkelabweichung zwischen den pixelbasierten Vektoren und den Kamera-zu-Punkt-Vektoren basiert; und

nachdem die Orientierung der bilderfassenden Vorrichtung geändert worden ist, erneut Bestimmen der Orientierung der bilderfassenden Vorrichtung, ohne das Abbilden von jedem Pixel zu wiederholen, durch Erzeugen von pixelbasierten Vektoren aus den Pixelpositionen der Vielzahl von Punkten unter Anwendung der Winkelversätze und

iterativ Ausrichten der pixelbasierten Vektoren auf die Kamera-zu-Punkt-Vektoren, um eine Rotationsmatrix zu bestimmen, die eine Orientierung der bilderfassenden Vorrichtung und eine Metrik beschreibt, die auf einer mittleren quadratischen Winkelabweichung zwischen den pixelbasierten Vektoren und den Kamera-zu-Punkt-Vektoren basiert.

**6.** Verfahren nach Anspruch 5, wobei die optischen Verzeichnungen der bilderfassenden Vorrichtung kissenförmige und tonnenförmige Verzeichnungen enthalten.

## Revendications

**1.** Système (20) comprenant :

un processeur d'ordinateur (21) conçu pour :

recevoir d'un dispositif de détection d'image (60) une image représentant une scène, un emplacement du dispositif de détection d'image en coordonnées du monde réel et des emplacements d'une pluralité de points (410, 420, 430, 440) de la scène dans les coordonnées du monde réel ;
déterminer et enregistrer des emplacements de pixels de la pluralité de points ;
déterminer un centre de l'image ;
mapper chaque pixel de l'image à un décalage angulaire par rapport au centre de l'image, le mappage de chaque pixel caractérisant et supprimant les distorsions optiques du dispositif de détection d'image et le décalage angulaire comprenant un décalage latéral par rapport au centre de l'image et un décalage vertical par rapport au centre de l'image ;
générer des vecteurs caméra-vers-point depuis le dispositif de détection d'image jusqu'aux emplacements de la pluralité de points à l'aide de l'emplacement du dispositif de détection d'image en coordonnées du monde réel et des emplacements d'une pluralité de points de la scène dans les coordonnées du monde réel ;
générer des vecteurs à base de pixels à partir des emplacements de pixels de la pluralité de points à l'aide des décalages angulaires ; et
aligner de manière itérative les vecteurs à base de pixels sur les vecteurs caméra-vers-point pour déterminer une matrice de rotation décrivant une pose du dispositif de détection d'image et une métrique basée sur une erreur quadratique moyenne angulaire entre les vecteurs à base de pixels et les vecteurs caméra-vers-point ; et
une fois que la pose du dispositif de détection d'image a été changée, déterminer à nouveau la pose du dispositif de détection d'image, sans répéter le mappage de chaque pixel, par
génération de vecteurs à base de pixels à partir des emplacements de pixels de la pluralité de points à l'aide des décalages angulaires ; et
aligner de manière itérative les vecteurs à base de pixels sur les vecteurs caméra-vers -point pour déterminer une matrice de rotation décrivant une pose du dispositif de détection d'image et une métrique basée sur une erreur quadratique moyenne angulaire entre les vecteurs à base de pixels et les vecteurs caméra-vers-point.

**2.** Système selon la revendication 1, dans lequel les distorsions optiques du dispositif de détection d'image comprennent une distorsion en coussin et une distorsion en barillet.

3. Dispositif de stockage lisible par ordinateur, comprenant des instructions qui, lorsqu'elles sont exécutées par un processeur (21), exécutent un procédé comprenant :

la réception (505), depuis un dispositif de détection d'image (60), d'une image représentant une scène, un emplacement du dispositif de détection d'image en coordonnées du monde réel et des emplacements d'une pluralité de points (410, 420, 430, 440) de la scène dans les coordonnées du monde réel ;
la détermination et l'enregistrement (510) d'emplacements de pixels de la pluralité de points ;
la détermination (515) d'un centre de l'image ;
le mappage (520) de chaque pixel de l'image à un décalage angulaire du centre de l'image, le mappage de chaque pixel caractérisant et supprimant les distorsions optiques du dispositif de détection d'image et le décalage angulaire comprenant un décalage latéral par rapport au centre de l'image et un décalage vertical par rapport au centre de l'image ;
la génération (525) de vecteurs caméra-vers-point du dispositif de détection d'image vers les emplacements de la pluralité de points à l'aide de l'emplacement du dispositif de détection d'image en coordonnées du monde réel et d'emplacements d'une pluralité de points de la scène dans les coordonnées du monde réel ;
la génération de vecteurs à base de pixels à partir des emplacements de pixels de la pluralité de points à l'aide des décalages angulaires ; et
l'alignement de manière itérative des vecteurs à base de pixels sur les vecteurs caméra-vers-point pour déterminer une matrice de rotation décrivant une pose du dispositif de détection d'image et une métrique basée sur une erreur quadratique moyenne angulaire entre les vecteurs à base de pixels et les vecteurs caméra-vers-point ; et
une fois que la pose du dispositif de détection d'image a été modifiée, une nouvelle détermination de la pose du dispositif de détection d'image, sans répétition du mappage de chaque pixel, par
génération de vecteurs à base de pixels à partir des emplacements de pixels de la pluralité de points à l'aide des décalages angulaires ; et
l'alignement de manière itérative des vecteurs à base de pixels sur les vecteurs caméra-vers-point pour déterminer une matrice de rotation décrivant une pose du dispositif de détection d'image et une métrique basée sur une erreur quadratique moyenne angulaire entre les vecteurs à base de pixels et les vecteurs caméra-vers-point.

4. Dispositif de stockage lisible par ordinateur selon la revendication 3, dans lequel les distorsions optiques du dispositif de détection d'image comprennent une distorsion en coussin et une distorsion en barillet.

5. Procédé mis en oeuvre par ordinateur, comprenant :

la réception (505), depuis un dispositif de détection d'image (60), d'une image représentant une scène, un emplacement du dispositif de détection d'image en coordonnées du monde réel et des emplacements d'une pluralité de points de la scène dans les coordonnées du monde réel ;
la détermination et l'enregistrement (510) d'emplacements de pixels de la pluralité de points ;
la détermination (515) d'un centre de l'image ;
le mappage (520) de chaque pixel de l'image à un décalage angulaire du centre de l'image, le mappage de chaque pixel caractérisant et supprimant les distorsions optiques du dispositif de détection d'image et le décalage angulaire comprenant un décalage latéral par rapport au centre de l'image et un décalage vertical par rapport au centre de l'image ;
la génération (525) de vecteurs caméra-vers-point du dispositif de détection d'image vers les emplacements de la pluralité de points à l'aide de l'emplacement du dispositif de détection d'image en coordonnées du monde réel et d'emplacements d'une pluralité de points de la scène dans les coordonnées du monde réel ;
la génération de vecteurs à base de pixels à partir des emplacements de pixels de la pluralité de points à l'aide des décalages angulaires ; et
l'alignement de manière itérative des vecteurs à base de pixels sur les vecteurs caméra-vers-point pour déterminer une matrice de rotation décrivant une pose du dispositif de détection d'image et une métrique basée sur une erreur quadratique moyenne angulaire entre les vecteurs à base de pixels et les vecteurs caméra-vers-point ; et
une fois que la pose du dispositif de détection d'image a été modifiée, une nouvelle détermination de la pose du dispositif de détection d'image, sans répétition du mappage de chaque pixel, par
génération de vecteurs à base de pixels à partir des emplacements de pixels de la pluralité de points à l'aide des décalages angulaires ; et

l'alignement de manière itérative des vecteurs à base de pixels sur les vecteurs caméra-vers-point pour déterminer une matrice de rotation décrivant une pose du dispositif de détection d'image et une métrique basée sur une erreur quadratique moyenne angulaire entre les vecteurs à base de pixels et les vecteurs caméra-vers-point.

6. Procédé selon la revendication 5, dans lequel les distorsions optiques du dispositif de détection d'image comprennent une distorsion en coussin et une distorsion en barillet.

RANGE, AZIMUTH AND
ELEVATION MEASUREMENTS
FOR CAMERA AND CAMERA
SCENE POINTS

110

**STEP 1**
CAMERA SCENE
GEODETIC SURVEY

CAMERA AND SCENE POINTS
GEODETIC COORDINATES

130

**STEP 3**
CAMERA SCENE
FITTING

CAMERA POSE, PIXEL TO
REAL WORLD VECTORS, AND
QUALITY OF SOLUTION

SPECIAL CAMERA
IMAGERY

120

**STEP 2**
CAMERA FIELD OF
VIEW MAPPING

CAMERA FIELD-OF-VIEW
MAPS AND MAP QUALITY

THIS METHOD RESULTS IN HIGH ACCURACY ANGULAR TARGET
OBSERVATIONS (AZ, EL) IN REAL WORLD COORDINATES BASED
ON TARGET LOCATION WITHIN THE CAMERA IMAGE THAT CAN BE
USED FOR HIGH ACCURACY TARGET GEOLOCATION AND TRACKING

*Fig. 1*

EP 2 847 741 B1

SCENE POINT LOCATIONS (X, Y, Z OR LAT., LONG., ALT.)

CAMERA LOCATION (X, Y, Z OR LAT., LONG., ALT.)

STEP 1: POINT SURVEY DEFINES TRUE GEOMETRY TO BE MATCHED IN THE CAMERA SCENE (TRUE AZ/EL VECTORS FROM CAMERA TO SCENE POINTS). TOTAL STATION USE FOR THIS STEP CAN SPEED UP THE PROCESS AND PRODUCE HIGHLY ACCURATE RESULTS (ACCURACY IS BASED ON EQUIPMENT AND MEASURING METHOD USED)

Fig.2A

STEP 2: EACH CAMERA PIXEL IS MAPPED TO AN AZIMUTH AND ELEVATION ANGLE OFFSET FROM CENTER PIXEL AND REFERENCE AZ/EL LOOKUP TABLES ARE CREATED (SOLUTION ACCEPTABILITY CAN BE ASSESSED BASED ON MEAN AND MAX PIXEL ERROR)

*Fig.2B*

STEP 3: PIXEL BASED VECTORS ARE ALIGNED WITH REAL WORLD VECTORS OF THE SCENE POINTS (SOLUTION ACCEPTABILITY CAN BE ASSESSED BASED ON ANGULAR RMS ERROR)

*Fig.2C*

STEP 1: GEODETIC SURVEY VIA TOTAL STATION TO DEFINE
HIGHLY ACCURATE REAL WORLD GEOMETRY BETWEEN
CAMERA AND SCENE POINTS

WEST

320
CAMERA

RANGE, AZIMUTH, AND
ELEVATION READINGS
TO CAMERA POSITION

SLANT
RANGE

UP

ELEVATION ANGLE

RANGE, AZIMUTH, AND
ELEVATION READINGS
TO CAMERA SCENE POINTS

AZIMUTH ANGLE

NORTH

~310

TOTAL STATION

*Fig.3*

EP 2 847 741 B1

Fig. 4

500 —

505
AN IMAGE FROM AN IMAGE SENSING DEVICE IS RECEIVED INTO A COMPUTER PROCESSOR. THE COMPUTER PROCESSOR ALSO RECEIVES FROM THE IMAGE SENSING DEVICE A LOCATION OF THE IMAGE SENSING DEVICE IN REAL WORLD COORDINATES, AND LOCATIONS OF A PLURALITY OF POINTS IN THE SCENE IN THE REAL WORLD COORDINATES.

510
THE COMPUTER PROCESSOR DETERMINES AND RECORDS PIXEL LOCATIONS OF THE PLURALITY OF POINTS.

515
THE CENTER OF THE IMAGE IS DETERMINED.

520
EACH PIXEL IN THE IMAGE IS MAPPED TO AN ANGULAR OFFSET FROM THE CENTER OF THE IMAGE.

525
VECTORS ARE GENERATED. THE VECTORS EXTEND FROM THE IMAGE SENSING DEVICE TO THE LOCATIONS OF THE PLURALITY OF POINTS, AND THE VECTORS ARE USED TO DETERMINE A POSE OF THE IMAGE SENSING DEVICE.

530
THE MAPPING OF EACH PIXEL CHARACTERIZES AND REMOVES OPTICAL DISTORTIONS OF THE IMAGE SENSING DEVICE.

535
THE OPTICAL DISTORTIONS OF THE IMAGE SENSING DEVICE INCLUDE PIN CUSHION AND BARREL DISTORTION.

540
A POSE OF THE IMAGE SENSING DEVICE IS DETERMINED WHEN THE PIXEL LOCATIONS OF THE PLURALITY OF POINTS ARE GIVEN.

545
THE ANGULAR OFFSET COMPRISES A LATERAL OFFSET FROM THE CENTER OF THE IMAGE AND A VERTICAL OFFSET FROM THE CENTER OF THE IMAGE.

550
THE REAL WORLD COORDINATES OF THE PLURALITY OF POINTS IN THE SCENE ARE USED TO DETERMINE A POSE OF THE IMAGE SENSING DEVICE.

*Fig. 5*

*Fig.6*

SYSTEM MEMORY

(ROM) 24

BIOS 26

22

OPERATING SYSTEM 35

APPLICATION PROGRAMS 36

OTHER PROGRAM MODULES 37

PROGRAM DATA 38

25

CAMERA

60

MONITOR

47

PROCESSING UNIT 21

VIDEO ADAPTER

48

20

SYSTEM BUS

23

HARD DISK DRIVE INTERFACE 32

MAGNETIC DISK DRIVE INTERFACE 33

OPTICAL DRIVE INTERFACE 34

SERIAL PORT INTERFACE 46

NETWORK INTERFACE 53

LOCAL AREA NETWORK

27

28

30

51

29

31

42

MODEM 54

WIDE AREA NETWORK

40

52

49

REMOTE COMPUTER

50

OPERATING SYSTEM 35

APPLICATION PROGRAMS 36

OTHER PROGRAM MODULES 37

PROGRAM DATA 38

APPLICATION PROGRAMS 36

EP 2 847 741 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090323121 A1
- US 20050168437 A1

**Non-patent literature cited in the description**

- **TOBIAS NÖLL et al.** Markerless Camera Pose Estimation - An Overview. IRTG Workshop, 2010, 45-54
- **ADNAN ANSAR ; KOSTAS DANIILIDIS.** Linear Pose Estimation from Points or Lines. *IEEE PAMI,* 2003, vol. 25 (5